# EUROPÄISCHE PATENTANMELDUNG

(11) **EP 2 163 503 A2**
(43) Veröffentlichungstag der Anmeldung: **17.03.2010**
(21) Anmeldenummer: 09011723.5
(22) Anmeldetag: 14.09.2009
(51) Int. Cl.: B66C 23/00

(54) **Handhabungsgerät zum Bewegen von Gegenständen, insbesondere Balancer**

(30) Priorität: 16.09.2008 DE 102008047831
(71) Anmelder: Kolibri Systemtechnik GmbH, 59071 Hamm (DE)
(72) Erfinder: Kampe, Norbert, 59071 Hamm (DE)
(74) Vertreter: Schneider, Uwe

(57) **Zusammenfassung**

Die Erfindung betrifft einen Balancer (4), aufweisend einen um eine vertikale Achse drehbar gelagerten Träger (1), an dem ein Tragarm (2) um eine horizontale Schwenkachse (A) wippbar gelagert ist und eine Last (G) angreift, wobei das von der Last (G) erzeugte Lastmoment durch ein Gegenmoment ausgeglichen wird, das auch durch eine auf den Tragarm (2) wirkende Gegenkraft (F) einer Kolben-/Zylindereinheit (3) aufgebracht wird, deren Zylinderachse (M) in jeder Schwenklage des Tragarms (2) im wesentlichen parallel zu der Längsachse des Tragarms (2) ausgerichtet ist. Hierbei wird die Lage der Zylinderachse (M) der Kolben-/Zylindereinheit (3) senkrecht zur Längsachse des Tragarms (2) in jeder Schwenkstellung des Tragarms (2) durch einen an der Kolben-/Zylindereinheit (3) angeordneten Hebel (8) vorgegeben. Es wird eine weitere Ausgestaltung eines Handhabungsgerätes (4) vorgeschlagen, bei der die Kolben-/Zylindereinheit (3) unter einem Neigungswinkel zu Längserstreckung des Tragarms angeordnet wird.

## Beschreibung

Die Erfindung betrifft ein Handhabungsgerät zum Bewegen von Gegenständen, insbesondere einen Balancer gemäß Oberbegriff des Anspruches 1 sowie ein Handhabungsgerät gemäß Oberbegriff des Anspruches 6.

Das Handhaben von Lasten etwa auf Baustellen, in verarbeitenden Betrieben oder dgl. wird zu einem nicht unbeträchtlichen Teil von Hand ausgeführt. Die die Handhabung ausführenden Personen müssen dabei im Laufe eines Arbeitstages insgesamt große Lasten bewältigen, warum es schon früh Bestrebungen gegeben hat, derartige Handhabungsvorgänge körperlich zu vereinfachen.

Hierfür sind Handhabungsgeräte bzw. Manipulatoren in Form sog. Balancer bekannt, bei denen durch entsprechende mechanische Hebeleinrichtungen die Last gehandhabt werden kann und dabei durch Hebelwirkung eine Verringerung der Belastung der handhabenden Person erreicht und die Arbeit dadurch vereinfacht wird. Derartige, schon in der Antike verwendete Geräte, bei denen ein aufgeständerter Balken als Hebel dient und eine Last durch eine möglichst gleich große Gegenlast ausgeglichen wird, werden in ihrer grundsätzlichen Bauform auch heute noch benutzt.

Bei der heute gebräuchlichen Bauform als Balancer wird die Last hingegen nicht mehr ausschließlich durch eine Gegenlast kompensiert, sondern es wird ganz oder teilweise mit fluidischen Antrieben wie etwa hydraulischen oder pneumatischen Zylindern gearbeitet, die über eine entsprechende Ansteuerung möglichst genau eine Kraftwirkung auf eine Hebelanordnung ausüben, die die Kraftwirkung aufgrund des Gewichts der Last auf diese Hebelanordnung kompensieren soll. Die Einregelung der Kraftwirkung muss dabei laufend so erfolgen, dass die Wirkung des fluidischen Antriebs auf die jeweiligen Lastangriffspunkte der Last und die Hebelverhältnisse an der Hebelanordnung genau kompensiert und die handhabende Person im Idealfall die Last kraftfrei bewegen kann. Bei derartigen Balancern werden zur Gewährleistung eines variablen Arbeitsradius' aufwändigere Hebelsysteme in Form von Parallelogrammgestängen verwendet.

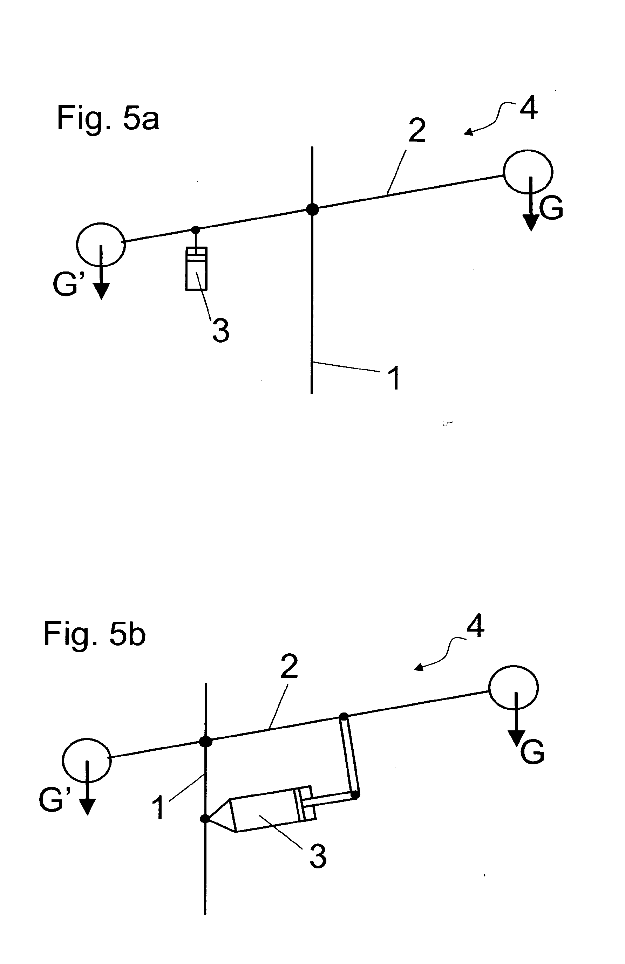

Für die Erzielung einer in jeder Benutzungslage des Hebelsystems genau kompensierten Lastwirkung ist die räumliche Zuordnung des fluidischen Antriebs relativ zu dem Hebelsystem und der Angriffspunkt des fluidischen Antriebs an dem Hebelsystem von zentraler Bedeutung. Hierbei gibt es zwei Varianten, die allerdings mit einigen Problemen in der Umsetzung zu kämpfen haben. Die ideale Lösung ist ein in jeder Lage ausgeglichenes Hebelsystem, bei dem keine Abweichungen von der lastweisen Betriebsweise in allen mit dem Balancer erreichbaren Winkellagen auftreten können, man spricht dabei vom sog. echten Balancer. Derzeit sind zwei Geräte bekannt, die auf der in der Figur 5a dargestellten ersten Grundkonfiguration basieren. Hierbei wird der fluidische Antrieb 3 im wesentlichen senkrecht und damit etwa parallel zu der vertikalen Drehachse eines Ständers 1 an dem Tragarm 2 angeordnet. Die andere Grundkonfiguration ist in der Figur 5b dargestellt, bei der der fluidische Antrieb 3 unterhalb des Tragarms 2 und etwa parallel zu der Längserstreckung des Tragarms 2 angeordnet ist.

Derzeit sind zwei kommerzielle Systeme am Markt erhältlich, die beide auf der Grundkonfiguration gemäß Figur 5a basieren. Durch entsprechende Einrichtungen wird hierbei der fluidische Antrieb in einer senkrechten Lage gehalten. Bei der ersten Lösung gemäß der DE 196 19 880 A1 erfolgt dies über ein selbstlaufendes Rollensystem, bei der anderen Lösung über ein Hebelsystem. Das Grundsystem gemäß der Figur 5a besitzt jedoch drei gravierende Nachteile gegenüber dem Grundsystem der Figur 5b.
□ Die Anordnung des fluidischen Antriebs am hinteren Ende des Balancers ist bauartbedingt derart, dass er sich oft im Kopfhöhe der handhabenden Person befindet und um den vertikalen Ständer rotiert.
□ Der fluidische Antrieb wird auf der Kolbenstangenseite mit dem Fluid beaufschlagt. Hier sind zwei Dichtungen mit Reibung zu überwinden, und die Kraft des fluidischen Antriebs ist geringer als bei der Beaufschlagung mit einem Fluid auf der kolbenstangenlosen Seite.
□ Die Kosten für die Verfahreinheit sind sehr hoch, da schon bei kleinen Lasten um das ca. fünffach höhere Lasten an den Verfahrwagen auftreten. Zudem hat sich die Ausrichtung in der Praxis als schwierig erwiesen.

Bei einem Grundsystem gemäß der Figur 5b ergibt sich ein Problem durch die sich abhängig von der Lage des Tragarms des Balancers ständig verändernde Gewichtskraft der Kolbenstange des fluidischen Antriebs oder bei einem umgekehrten Einbau die Gewichtskraft des Zylindergehäuses. Bei den bisherigen Systemen dieses Typs ist keine Lösung bekannt, die das Problem der beweglichen Last der Kolbenstange oder des Zylinderkörpers zufriedenstellend gelöst hat.

Die ersten beiden bezüglich der Grundkonfiguration gemäß Figur 5a genannten Nachteile entfallen jedoch, so dass sich mehrere am Markt erhältliche Balancer für das Grundsystem gemäß Figur 5b entschieden haben.

Das Grundsystem gemäß Figur 5b wird in der Technik meistens nur mit einem Zylinder eingesetzt der unter dem Tragarm liegt, da hierbei der zweite Nachteil des Grundsystems gemäß Figur 5a entfällt. Bei den bisher üblichen Grundsystemen gemäß Figur 5b ergibt sich, wenn man den Zylinder in einer waagerechten Lage parallel zum Tragarm einbaut, immer das Problem, dass sich das Gewicht der Kolbenstange (z.B. bei einem Zylinder: Kolbendurchmesser D=125 Kolbenstangendurchmesser d=32 ca. 4kg) beim Ausfahren des Zylinders entlang des Tragarms linear verschiebt. Diese geschieht bei jeder Auf- und Abwärtsbewegung des Gerätes. Dadurch versucht ein leicht laufender Balancer eine Lage einzunehmen, in der der Tragarm nach oben oder unten ausbricht, obwohl das Gesamtsystem in der Mittelstellung völlig schwerelos wirkt. Dieser Effekt ist natürlich unerwünscht und durch ein selbstständig bewegtes System können Unfälle passieren. Hiergegen wird bei allen Herstellern mit einer Balancefunktion eine 'gewollte' Reibung eingebaut, um ein anhalten des Armes in jeder Lage zu erreichen. Hierdurch wird aber die Handhabung wiederum erschwert, da eine entsprechende Last durch die Reibung zu überwinden ist.

Aufgabe der vorliegenden Erfindung ist es daher, ein Handhabungsgerät zum manuellen Bewegen von Lasten derart weiter zu entwickeln, dass eine weitgehend lastfreie Handhabung in jeder Lage des Tragarms des Handhabungsgerätes möglich wird und unerwünschte Effekte aufgrund der Lageänderung innerhalb des fluidischen Antriebs nicht mehr auftreten können.

Die Lösung der erfindungsgemäßen Aufgabe ergibt sich aus den kennzeichnenden Merkmalen des Anspruches 1 bzw. des Anspruches 6 in Zusammenwirken mit den Merkmalen des jeweils zugehörigen Oberbegriffes. Weitere vorteilhafte Ausgestaltungen der Erfindung ergeben sich aus den Unteransprüchen.

Die Erfindung gemäß Anspruch 1 geht aus von einem gattungsgemäßen Handhabungsgerät zum manuellen Bewegen von Lasten, insbesondere in Form eines Balancers, aufweisend einen um eine im wesentlichen vertikale Achse drehbar gelagerten Träger, an dem ein Tragarm mit einem Ende um eine im wesentlichen horizontale Schwenkachse wippbar gelagert ist und an dessen anderem Ende die Last angreift, wobei das von der Last um die Schwenkachse des Tragarms erzeugte Lastmoment durch ein Gegenmoment im wesentlichen ausgeglichen wird, das auch durch eine auf den Tragarm wirkende Gegenkraft einer Kolben-/Zylindereinheit aufgebracht wird, deren Zylinderachse in jeder Schwenklage des Tragarms im wesentlichen parallel zu der Längsachse des Tragarms ausgerichtet ist. Ein derartiges gattungsgemäßes Handhabungsgerät wird dadurch weiter entwickelt, dass die Lage der Zylinderachse der Kolben-/Zylindereinheit und damit der Wirkabstand der Gegenkraft auf den Tragarm senkrecht zur Längsachse des Tragarms in jeder Schwenkstellung des Tragarms durch einen an der Kolben-/Zylindereinheit angeordneten Hebel vorgegeben ist, der an einem Ende drehbar und am anderen Ende zur Längsachse des Tragarms dreh- und/oder verschiebbar angeordnet ist. Durch die Anordnung der Kolben-/Zylindereinheit oberhalb und im wesentlichen parallel zu dem Tragarm sowie die Ausrichtung der Kolben-/Zylindereinheit im wesentlichen parallel zu der Längsachse des Tragarms mit Hilfe des Hebels erfolgt eine Anpassung der Kraftwirkung der Kolben-/Zylindereinheit derart, dass zum einen die Kolben-/Zylindereinheit immer senkrecht auf die Wirklinie zwischen der Anbindung der Kolben-/Zylindereinheit und der Anbindung des Tragarms steht und damit die Einkopplung der Gegenkraft auf den Tragarm immer optimal erfolgt. Weiterhin wird der Einfluss der sich ständig verändernden Stellung der Kolbenstange der Kolben-/Zylindereinheit und die sich daraus ergebende ständige Verschiebung des Gesamtschwerpunktes der Kolben-/Zylindereinheit weitgehend kompensierbar und kann sich nicht als störender Einfluss auf den Gewichtsausgleich auswirken. Weiterhin kann sich der Hebel durch die Art seiner Lagerung von selbst an die jeweilige Stellung des Tragarms anpassen und die im wesentlichen parallele Ausrichtung der Kolben-/Zylindereinheit bezogen auf die Längsachse des Tragarms ohne zusätzlich Hilfsenergie oder aufwändige Verstelleinrichtungen gewährleisten. Damit ist ein erfindungsgemäßes Handhabungsgerät einfach und kostengünstig herstellbar und in seiner Funktion wesentlich genauer als bekannte Handhabungsgeräte hinsichtlich der Ausbalancierung von Lasten in allen erreichbaren Stellungen des Tragarms.

Von besonderem Vorteil ist es, wenn der Hebel an seinem der Kolben-/Zylindereinheit zugeordneten Ende drehbar an der Kolben-/Zylindereinheit, insbesondere am der Kolbenstange gegenüberliegenden Ende des Zylinders der Kolben-/Zylindereinheit angeordnet ist. Das zylinderseitige Ende der Kolben-/Zylindereinheit bietet eine einfache Möglichkeit, durch ein Schwenklager die Drehbeweglichkeit des Hebels vorzusehen.

Weiterhin ist es denkbar, dass der Hebel an seinem dem Tragarm zugeordneten Ende dreh- und verschiebbar relativ zu dem Tragarm ausgebildet ist. Insbesondere, wenn der Hebel an seinem dem Tragarm zugeordneten Ende dreh- und verschiebbar an einer Ausgleichsstange festgelegt ist, die mit dem Tragarm Teil eines Parallelogrammgestänges bildet, kann die Ausgleichsbewegung des Hebels zur Einstellung des im wesentlichen parallelen Abstands der Kolben-/Zylindereinheit bezogen auf die Längsachse des Tragarms selbständig und zuverlässig erfolgen. Hierzu kann in einer Weiterbildung der Hebel mittels einer Kulisse an der Ausgleichsstange verschiebbar festgelegt sein, wobei der Hebel mit einem Ende verdrehbar gegenüber der Kulisse gelagert ist. Durch das Vorsehen einer Kulissenführung kann der Hebel sich an die jeweilige Lage des Tragarms leicht durch eine kinematisch einfache Bewegung anpassen und durch die Verschwenkung den jeweiligen Abstand der Kolben-/Zylindereinheit einregulieren. Derartige Kulissenführungen und Drehgelenke sind kinematisch einfach aufgebaut und daher kostengünstig herstellbar sowie langlebig und unkompliziert im Betrieb.

Die Erfindung gemäß Anspruch 6 geht aus von einem gattungsgemäßen Handhabungsgerät zum manuellen Bewegen von Lasten, insbesondere in Form eines Balancers, aufweisend einen um eine im wesentlichen vertikale Achse drehbar gelagerten Träger, an dem ein Tragarm mit einem Ende um eine im wesentlichen horizontale Schwenkachse wippbar gelagert ist und an dessen anderem Ende die Last angreift, wobei das von der Last um die Schwenkachse des Tragarms erzeugte Lastmoment durch ein Gegenmoment im wesentlichen ausgeglichen wird, das auch durch eine auf den Tragarm wirkende Gegenkraft einer Kolben-/Zylindereinheit aufgebracht wird. Ein derartiges gattungsgemäßes Handhabungsgerät wird dadurch weiter entwickelt, dass die Zylinderachse in jeder Schwenklage des Tragarms unter einem Neigungswinkel β zu der Längsachse des Tragarms ausgerichtet ist, wobei der Wirkabstand der Gegenkraft auf den Tragarm in jeder Schwenkstellung des Tragarms durch den Abstand zwischen dem Drehpunkt des Tragarms und dem Drehpunkt der Kolben-/Zylindereinheit am Träger vorgegeben ist sowie Drehpunkt des Tragarms und Drehpunkt der Kolben-/Zylindereinheit um den gleichen Neigungswinkel β zueinander geneigt übereinander angeordnet sind. Von Vorteil bei diesem Handhabungsgerät ist es, dass der Wirkabstand der Gegenkraft durch die geneigte Anordnung ausschließlich durch den Abstand der Drehgelenke für die Kolben-/Zylindereinheit und den Tragarm definiert wird und somit unabhängig von der Schwenkstellung des Tragarms ist. Die Kraftwirkung der Gegenkraft wirkt dabei immer senkrecht auf die Verbindungslinie der beiden genannten Drehgelenke und ist damit unabhängig von der Schwenkstellung des Tragarms. Bei einer üblicherweise gering geneigten Anordnung der Drehgelenke zueinander ergeben sich damit über weite Bereiche der Schwenkbewegung des Tragarms gleichbleibende Kraftverhältnisse für das Ausbalancieren der an dem Lastarm angreifenden Last und damit eine besonders gute Balancewirkung mit nur geringen Fehlereinflüssen.

Hierbei ist es insbesondere von Vorteil, wenn der Neigungswinkel β der Zylinderachse durch einen an der Kolben-/Zylindereinheit angeordneten Hebel vorgegeben ist, der selbst wieder unter dem Neigungswinkel bezogen auf die Senkrechte angeordnet werden kann. Durch den Hebel wird eine Zwangsführung zwischen dem Parallelogrammgestänge aus Tragarm und einer Ausgleichsstange hergestellt, insbesondere wenn der Hebel seinem dem Tragarm zugeordneten Ende dreh- und/oder verschiebbar an der Ausgleichsstange festgelegt ist.

Weiterhin kann der Hebel am der Kolbenstange zugeordneten Ende des Zylinders der Kolben-/Zylindereinheit angeordnet sein, wodurch die Baugröße von Hebel und Kolben-/Zylindereinheit verringert werden kann.

Ebenfalls ist es denkbar, dass die Kolbenstange der Kolben-/Zylindereinheit mit einem Bereich des Tragarms wechselwirkt, der unter dem Neigungswinkel β + 90° geneigt von dem Tragarm abgewinkelt angeordnet ist. Hierdurch werden besonders einfach Verhältnisse bei der Übertragung der Gegenkraft auf den Tragarm erreicht.

Von besonderem Vorteil ist es, dass bei dem erfindungsgemäßen Handhabungsgerät die Kolben-/Zylindereinheit derart schwenkbar an dem Träger angeordnet sein kann, dass der Gesamtschwerpunkt der entsprechend der Schwenkstellung des Tragarms unterschiedlich ausgefahrenen Kolben- /Zylindereinheit sich beim Schwenken des Tragarms im wesentlichen auf einer Kreisbahn um den Drehpunkt des Tragarms bewegt. Durch diese eng um den Drehpunkt des Tragarms herum angeordnete Verschiebung des sich jeweils abhängig von der Kolbenstellung der Kolben-/Zylindereinheit sich verändernden Gesamtschwerpunktes treten nur geringe Störeinflüsse auf den Balancezustand ein, so dass die Last am Tragarm im wesentlichen in jeder Lage des Tragarms nahezu optimal ausbalanciert gehalten ist. Dadurch kann der die Handhabung Ausführende nahezu von allen Einflüssen aufgrund Störungseffekten bekannter Handhabungsgeräte entlastet werden.

Von Vorteil ist es hierbei insbesondere für die stehende Anordnung des Handhabungsgerätes, wenn der Drehpunkt der Kolben-/Zylindereinheit vertikal versetzt, vorzugsweise oberhalb und beabstandet zu dem Drehpunkt des Tragarms an dem Träger angeordnet ist. Hierdurch wird erreicht, dass die Kolben-/Zylindereinheit oberhalb des Tragarms angeordnet ist und wie vorstehend beschrieben arbeiten kann.

Von Vorteil ist es weiterhin, wenn die Kolben-/Zylindereinheit derart an dem Träger angeordnet ist, dass der Zylinder mit seinem der Kolbenstange zugeordneten Endbereich drehbar an dem Träger festgelegt ist. Hierdurch ergibt sich eine besonders günstige Lastverteilung des Gesamtschwerpunktes der Kolben-/Zylindereinheit in jeder Stellung des Tragarms, da der Gesamtschwerpunkt durch die beidseitig des Gelenkes liegenden Teillasten von Kolben und Zylinder sich gegenseitig weitgehend kompensieren und daher nur die Belastungsänderungen aufgrund der Verschiebung der Kolbenstange der Kolben-/Zylindereinheit kompensiert werden müssen. Hierzu lässt es sich im Hinblick auf die Lagerung der Kolben-/Zylindereinheit, die mit dem der Kolbenstange zugeordneten Endbereich des Zylinders drehbar an dem Träger angeordnet wird, insbesondere einrichten, dass der Zylinder bezogen auf die vertikale Erstreckung des Trägers sich im wesentlichen auf einer Seite und die Kolbenstange sich im wesentlichen auf der gegenüberliegenden Seite des Trägers befindet.

Von besonderem Vorteil ist es, wenn die Kolbenstange der Kolben-/Zylindereinheit gegen einen Vorsprung des Tragarms drückt, der vorzugsweise im wesentlichen senkrecht zu der Längserstreckung des Tragarms von dem kürzeren Ende des Tragarms L-förmig absteht. Durch diese Anordnung des Vorsprungs kann die Übertragung der Gegenkraft von der Kolben-/Zylindereinheit auf den Tragarm immer im wesentlichen parallel zu der Längserstreckung des Tragarms erfolgen, so dass die unterschiedliche Geometrie des Handhabungsgerätes in seinen verschiedenen kinematischen Anordnungen für die Einleitung der Gegenkraft in den Tragarm keine negativen Einflüsse auf die Ausbalancierung der Last mehr hat. Hierbei ist es insbesondere denkbar, dass der Vorsprung des Tragarms hebelartig in einem Winkel von 90° gegenüber der Längserstreckung des Tragarms von dem Tragarm abgewinkelt ist. Insbesondere, wenn die Kolbenstange die das Gegenmoment erzeugende Gegenkraft in Richtung der Zylinderachse seitlich frei verschiebbar auf eine Auflagefläche des Hebels des Tragarms überträgt, kann einerseits durch den Hebel an der Kolben-/Zylindereinheit und die Verschiebbarkeit der Krafteinleitung der Gegenkraft in den Tragarm eine optimale und von unerwünschten Störeinflüssen freie Erzeugung des Gegenmomentes erreicht werden, so dass eine optimale Ausbalancierung der Last am Tragarm erreicht wird. Hierbei kann sich durch die unterschiedlichen Winkelverhältnisse bei den unterschiedlichen Stellungen des Tragarms der Angriffspunkt der Gegenkraft der Kolben-/Zylindereinheit an der Auflagefläche des Vorsprungs in Abhängigkeit von der Veränderung des Angriffspunktes der Last bezogen auf den Drehpunkt des Tragarms passend verändern und sich immer optimal auf die jeweiligen Angriffsverhältnisse der Last einstellen. Von Vorteil ist es hierbei, dass sich durch die Anordnung und Lagerung der Kolben-/Zylindereinheit der Abstand zwischen Zylinderachse und Drehpunkt des Tragarms an dem Träger gegengleich zu der Veränderung des Angriffspunktes der Last bezogen auf den Drehpunkt des Tragarms verändert. Hierdurch sind immer lineare Veränderungen der Verhältnisse des Lastangriffs am Tragarm und des Kraftangriffs der Kolben-/Zylindereinheit gegeben.

Denkbar ist es weiterhin, dass an dem Tragarm ein Ausgleichsgewicht in Längsrichtung des Tragarms, vorzugsweise in und/oder quer zur Längsrichtung des Tragarms verschiebbar, gehaltert ist, mit dem die Wirkung der Gegenkraft der Kolben-/Zylindereinheit justierbar ist. Hierdurch können einmalig oder wiederkehrend durch Veränderung der Größe oder der Lage des Ausgleichsgewichtes relativ zu dem Tragarm Restfehler hinsichtlich der Ausbalancierung der Last beseitigt werden, indem sich die Gewichtskraft des Ausgleichsgewichtes und die sich dynamisch verändernden Gewichtskräfte aus Last und Eigengewichten der Handhabungsgerätes passend überlagern.

Von besonderem Vorteil ist es, wenn die Kolben-/Zylindereinheit auf der kolbenstangenlosen Seite des Zylinders mit Fluid beaufschlagbar ist. Hierdurch wird die innere Reibung der Kolben-/Zylindereinheit wesentlich reduziert, da auf dieser Seite nur eine Dichtung der Kolben-/Zylindereinheit Reibung verursachen kann und daher die Kraftwirkung der Kolben-/Zylindereinheit nur geringfügig von dieser Reibungskraft beeinflusst wird. Denkbar ist es aber auch insbesondere bei hängender Anordnung des Handhabungsgerätes, dass die Kolben-/Zylindereinheit auf der Seite der Kolbenstange des Zylinders mit Fluid beaufschlagt wird.

Weiterhin ist es zur Einjustierung der Wirkung der Kolben-/Zylindereinheit denkbar, dass die Kolben-/Zylindereinheit derart an dem Träger festgelegt und über den Hebel beabstandet von dem Tragarm geführt ist, dass die Mittelachse der Kolben-/Zylindereinheit wenige Winkelgrad abweichend von der parallelen Anordnung zur Längsachse des Tragarms ausgerichtet ist. Durch diese geringfügige Lageänderung zwischen Kolben-/Zylindereinheit und Tragarm, die etwa durch durch eine Veränderung der Länge zwischen den Drehpunkten des Hebels beeinflussbar ist, können Restfehler hinsichtlich der Ausbalancierung der Last beseitigt werden, dem der Gesamtschwerpunkt der Kolben-/Zylindereinheit durch die geringe Schiefstellung bezogen auf den Tragarm verschoben wird.

Von Vorteil ist es insbesondere, wenn die von der Kolben-/Zylindereinheit erzeugte Gegenkraft im wesentlichen konstant gehalten ist. Derartige konstante Gegenkräfte lassen sich mit Kolben-/Zylindereinheiten wie etwa pneumatischen oder hydraulischen Kolben-/Zylindereinheiten besonders einfach und zuverlässig erzeugen.

Eine besonders bevorzugte Ausführungsform des erfindungsgemäßen Handhabungsgerätes zeigt die Zeichnung.

Es zeigen:
- Figur 1: - eine erste Ausgestaltung des erfindungsgemäßen Handhabungsgerätes gemäß Anspruch 1 in einer horizontalen Stellung zur Ausbalancierung einer Last G mit obenliegend angeordneter Kolben-/Zylindereinheit,
- Figur 2: - das Handhabungsgerät gemäß Figur 1 in einer Schwenkstellung mit einer nach oben verschwenkten Lage des Tragarms beim Anheben der Last G,
- Figur 3: - das Handhabungsgerät gemäß Figur 1 in einer Schwenkstellung mit einer nach unten verschwenkten Lage des Tragarms beim Absenken der Last G,
- Figur 4: - eine andere Ausgestaltung des erfindungsgemäßen Handhabungs-gerätes gemäß Anspruch 7 in einer horizontalen Stellung mit zu der Längserstreckung des Tragarms geneigter Anordnung der Kolben-/Zylindereinheit,
- Figur 5a, 5b -: aus dem Stand der Technik bekannte Grundkonfigurationen gattungsgemäßer Handhabungsgeräte mit vertikaler (Fig. 5a) und tragarmparalleler Anordnung der Kolben-/Zylindereinheit (Fig. 5b).

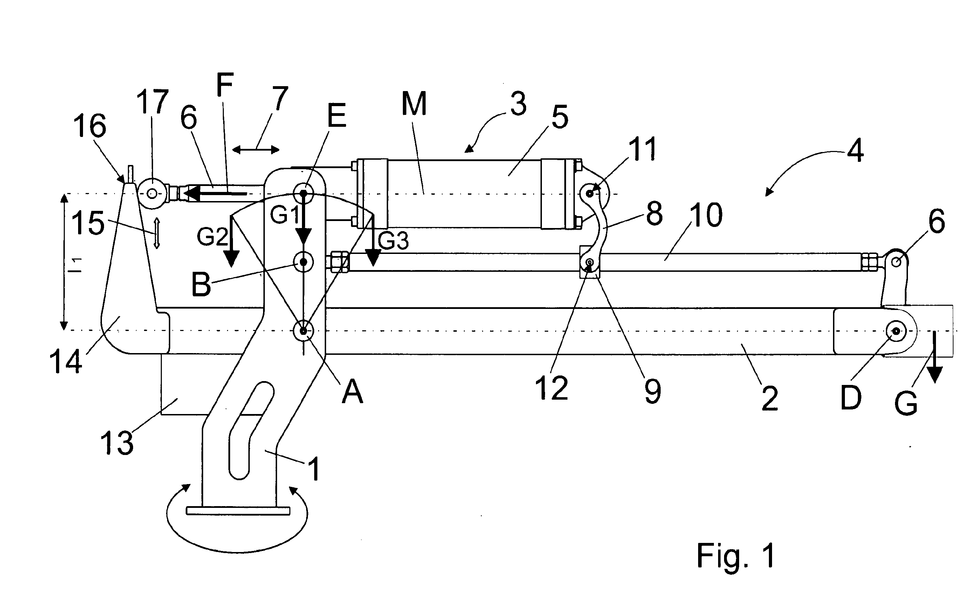

In den Figuren 1 bis 3 sind unterschiedliche Schwenkstellungen des im Ganzen mit der Sachnummer 4 bezeichneten Handhabungsgerätes in einer schematischen Darstellung zu erkennen, aus denen sich der Aufbau und die Funktion der Kolben-/Zylindereinheit 3, bestehend aus einem Zylinder 5 und einer Kolbenstange 6 bekannter Bauart erkennen lässt. Die Kolben-/Zylindereinheit 3 kann dabei als pneumatischer oder hydraulischer Antrieb grundsätzlich bekannter Bauweise aufgebaut sein und wird daher hier nur in seiner speziellen Funktion beschrieben.

Die Kolben-/Zylindereinheit 3 ist dabei an einem grundsätzlich bekannten Handhabungsgerät 4, einem sog. Balancer 4 angeordnet, der ebenfalls auf seine wesentlichen Bauteile beschränkt dargestellt ist. Hierbei besteht der Grundaufbau des Balancers 4 aus einem Tragarm 2, der in einem Drehgelenk A an einem etwa bodenseitig drehbar befestigten Träger 1 schwenkbar festgelegt ist, wobei der Tragarm 2 mit einer Ausgleichsstange 10 und nicht näher bezeichneten Hebeln über die Drehgelenke A, B, C und D Teil eines Parallelogrammgestänges bilden, das ebenfalls grundsätzlich für derartige Balancer 4 bekannt ist. Am in der Figur 1 rechten Ende des Tragarms 2 ist eine Last G angedeutet, die aufgrund des Gewichtes eines zu handhabenden Gegenstandes an dem Tragarm 2 angreift. Dieser Gegenstand kann an weiteren lasttragenden Teilen des Balancers 4, wie etwa weiteren Tragarmen oder Greifern befestigt sein, die in diesem Zusammenhang nicht weiter interessieren. Die Gesamtlast aus der Gewichtskraft des Gegenstandes und dieser weiteren Bauteile des Balancers 4 wird dabei durch die Last G symbolisiert.

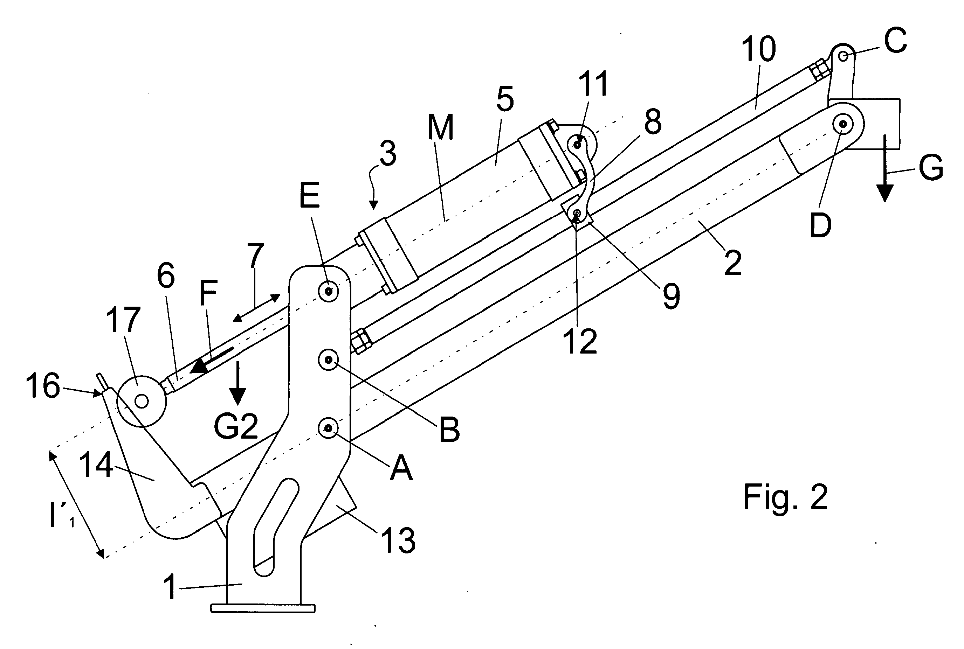

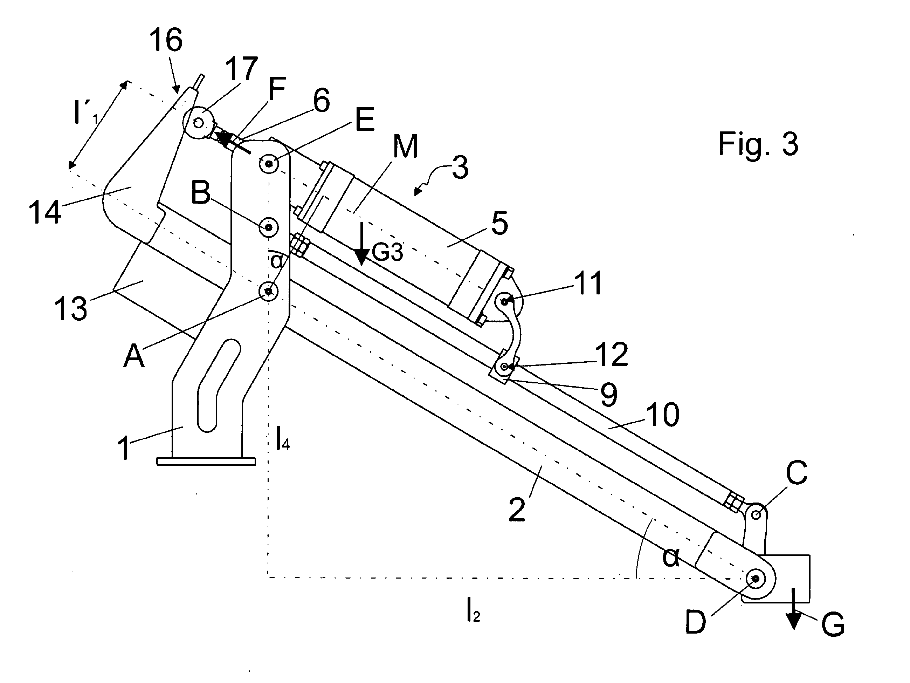

Durch die Lagerung des Tragarms 2 in dem Gelenk A sowie das Vorhandensein des Parallelogrammgestänges mit der Ausgleichsstange 10 wird bei einer Veränderung der Lage des Gegenstandes, z.B. bei einem Anheben des Gegenstandes durch das Schwenken des Tragarms nach oben, die Last G angehoben und der Balancer wird eine Schwenkstellung wie in Figur 2 dargestellt einnehmen. Bei einem Absenken der Last G wird der Balancer hingegen eine Schwenkstellung wie in Figur 3 dargestellt einnehmen.

Um die Last G möglichst gut ausbalanciert und damit mit dem geringst möglichen Handhabungswiderstand bewegen zu können, muss auch durch die Kolben-/Zylindereinheit 3 eine Gegenkraft auf den Tragarm 2 ausgeübt werden, der die jeweilige Wirkung der Last G gerade genau ausgleicht. Hierzu wird die Kolben-/Zylindereinheit 3 benutzt, die in dem Gelenk E ebenfalls schwenkbar an dem Träger 1 angelenkt ist und von außen nicht weiter erkennbar mit einem Druckmedium versorgt wird. Wird beispielsweise Fluid auf die Seite des Zylinders 5 in die Kolben-/Zylindereinheit 3 eingepresst, so wird die Kolbenstange 6 aus der Kolben-/Zylindereinheit 3 geschoben und übt über eine Druckrolle 17 eine Gegenkraft F zu der Last G auf den Tragarm 2 aus. Hierzu ist an dem Tragarm 2 auf dem der Last G gegenüberliegend des Gelenkes A angeordneten Ende ein L-förmig ausgebildeter Vorsprung 14 angeordnet, der sich von dem Tragarm 2 weg in Richtung auf die Mittelachse M der Kolben-/Zylindereinheit 3 erstreckt und gegen die sich die Kolbenstange 6 mittels der Druckrolle 17 abstützt. Wird nun durch Änderung des Drucks in der Kolben-/Zylindereinheit 3 die Kolbenstange 6 in Verschieberichtung 7 passend herein oder heraus gefahren, so kann die Gegenkraft F genau so groß eingestellt werden, dass die Last G kompensiert wird und eine Person, die den Tragarm 2 mit einer nicht weiter dargestellten Führungseinrichtung bewegt, den Balancer 4 und die Last G nahezu kraftfrei bewegen kann.

Diese an sich bekannte, grundsätzliche Funktionsweise eines Balancers 4 wird bei der vorliegenden Erfindung durch die Anordnung und Lagesteuerung der Kolben-/Zylindereinheit 3 weiter verbessert.

Bei bekannten Balancern, bei denen die Kolben-/Zylindereinheit 3 bei paralleler Ausrichtung zur Längsachse des Tragarms (gemäß Figur 5b) unterhalb des Tragarms 2 angeordnet ist, ist die Balancewirkung zwar bei der in Figur 1 dargestellten Mittellage gut, doch ergeben sich Schwierigkeiten bei aus dieser Mittelage verkippten Stellungen, die naturgemäß einen Großteil der bei der Handhabung einzunehmenden Stellungen ausmachen.

Hierbei verändert sich die Stellung der Kolbenstange 6 und des Zylinders 5 der Kolben-/Zylindereinheit 3 laufend relativ zu dem Tragarm 2 und dadurch verändert sich auch die Gesamtwirkung aus den Gewichtskräften dieser Kolbenstange 6 und des Zylinders 5 bezogen auf den Tragarm 2. Diese Veränderung der Gewichtskräfte ist durchaus nennenswert und stört die Balancewirkung des Balancers 4 sehr nachteilig. Diese Störung der Balancewirkung des Balancers 4 führt dazu, dass das in der Mittelage gemäß Figur 1 ausbalancierte System schon bei relativ geringen Schiefstellungen nach oben bzw. unten ausbricht, wodurch die Handhabung mit dem Balancer 4 erschwert und das Eintreten von Unfällen befördert wird. Um dieses ungewünschte Ausbrechen zu vermeiden, bauen die Hersteller derartiger bekannter Balancer eine gewollte Reibung in den Balancer 4 ein, der zwar die Ausbrechneigung verringert, gleichzeitig aber die Handhabung von Gegenständen mit dem Balancer 4 erschwert.

Mit der erfindungsgemäßen drehbaren Anordnung der Kolben-/Zylindereinheit 3 und des Drehgelenks E oberhalb des Drehgelenkes A des Tragarms 2 sowie die etwa mittige Anordnung der Kolben-/Zylindereinheit 3 an dem Träger 1 und die gleichzeitige Lagesteuerung der Mittenachse M der Kolben-/Zylindereinheit 3 über den Hebel 8 wird erreicht, dass keinerlei Ausbrechneigung mehr entsteht und der Balancer 4 in allen Schwenklagen des Tragarms 2 nahezu ohne jede Kraftwirkung gehandhabt werden kann.

Hierzu ist zum einen die Kolben-/Zylindereinheit 3 derart an dem Drehgelenk E des Trägers 1 festgelegt, dass der Zylinder 5 mit seinem der Kolbenstange 6 zugewandten Ende an dem Träger 1 festgelegt ist. Hierdurch liegt die Kolben-/Zylindereinheit 3 etwa mittig oberhalb der übereinander angeordneten Drehpunkte A, B, E von Lastarm 2 und Ausgleichsstange 10, so dass in jeder Schwenkstellung des Tragarms 2 die Gewichtskraft des Zylinders 5 teilweise von der bezogen auf den Drehpunkt E entgegengesetzt wirkenden Gewichtskraft der Kolbenstange 6 ausgeglichen wird. Damit belastet das Gewicht der Kolben-/Zylindereinheit 3 den Tragarm 2 nur noch mit einem Differenzgewicht zwischen den Gewichtskräften des Zylinders 5 und der Kolbenstange 6. Im Falle der Stellung des Balancers 4 gemäß Figur 1 geht diese Gewichtskraft G1 genau durch die Gelenke A, B und E und der Balancer 4 ist somit genau im Gleichgewicht, wenn die Gegenkraft F entsprechend der Hebelverhältnisse der Hebellängen I₂ und I₁ die Last G ausgleicht.

Wird der Tragarm 2 nun aus dieser ausgeglichenen Mittelage gemäß Figur 2 ausgelenkt, so verändert sich zum einen die Kraftwirkung der Last G auf den Balancer 4, die durch den konstanten Druck in der Kolben-/Zylindereinheit 3 teilweise wieder kompensiert werden kann. Hierbei ändert sich aber auch die Gewichtskraft, die die Kolbenstange 6 auf den Balancer 4 ausübt und verursacht damit einen Fehler bei der Ausbalancierung der Last G. Diese Veränderung ist dabei abhängig von dem Cosinus des Winkels α, um den sich die Lage des Tragarms 2 aus der Horizontalen heraus gedreht hat. Diese Veränderung des Balancezustandes des Tragarms 2 wird nun bei dem erfindungsgemäßen Balancer 4 dadurch automatisch korrigiert, dass sich die Kolben-/Zylindereinheit 3 aufgrund Ihrer drehbaren Anlenkung im Drehpunkt E sowie aufgrund der Wirkung des Hebels 8 automatisch gegengleich zu diesem Effekt verändert und damit die Ausbalancierung in jeder Lage des Tragarms 2 gewährleistet.

Hierzu ist das dem Drehpunkt E gegenüberliegende Ende des Zylinders 5 über ein Drehgelenk 11 drehbar am Zylinderende gelagert, wobei der Hebel 11 selbst wiederum über eine Kulisse 9 und ein Drehgelenk 12 an der Ausgleichsstange 10 gelagert ist. Der Hebel 9 kann daher entsprechend der Schwenkstellung des Tragarms 2 unterschiedliche Winkellagen und Verschiebungen bezogen auf die Ausgleichsstange 10 einnehmen und verschiebt sich dabei immer derart, dass die Mittelachse M der Kolben-/Zylindereinheit 3 immer im wesentlichen parallel zu der Längsachse der Tragarms 2 ausgerichtet ist. Hierdurch verschiebt sich aber ebenfalls der Andruckpunkt der Druckrolle 17 an dem Vorsprung 14, der je nach Schwenklage des Tragarms 2 in Richtung 15 nach oben oder unten wandert. Hierdurch verändert sich gemäß Figuren 2 und 3 der Hebel I₁' der Wirkung der Gegenkraft F gegengleich und automatisch zu der Verschiebung des Gesamtschwerpunktes G2 bzw. G3 der Kolben-/Zylindereinheit 3, so dass diese Veränderung wiederum genau kompensiert wird. Der Gesamtschwerpunkt G2 bzw. G3 in dem beiden in den Figuren 2 und 3 dargestellten Schwenklagen des Tragarms 2 bewegt sich dabei im wesentlichen auf einer gebogenen Bahn um den Gelenkpunkt A herum, wie in der Figur 1 angedeutet. Diese nur geringe Veränderung gegenüber der Mittellage des Schwerpunktes G1 in der Figur 1 vereinfacht die beschriebene Korrektur des Balancezustandes des Balancers 4 weiter.

Eine weitere Justagemöglichkeit ergibt sich, wenn ein Ausgleichgewicht 13 an dem Tragarm 2 vorgesehen wird, das insbesondere längsverschieblich zu der Längsachse des Tragarms 2 oder quer dazu verschiebbar an diesem festgelegt wird. Hierdurch kann durch geringe Verschiebungen des Ausgleichgewichtes 13 eine Justage der Balancewirkung des Balancers 4 erreicht werden, die eine weitere Verbesserung der Balancewirkung oder auch nachträgliche Anpassungen an geänderte Verhältnisse ermöglicht.

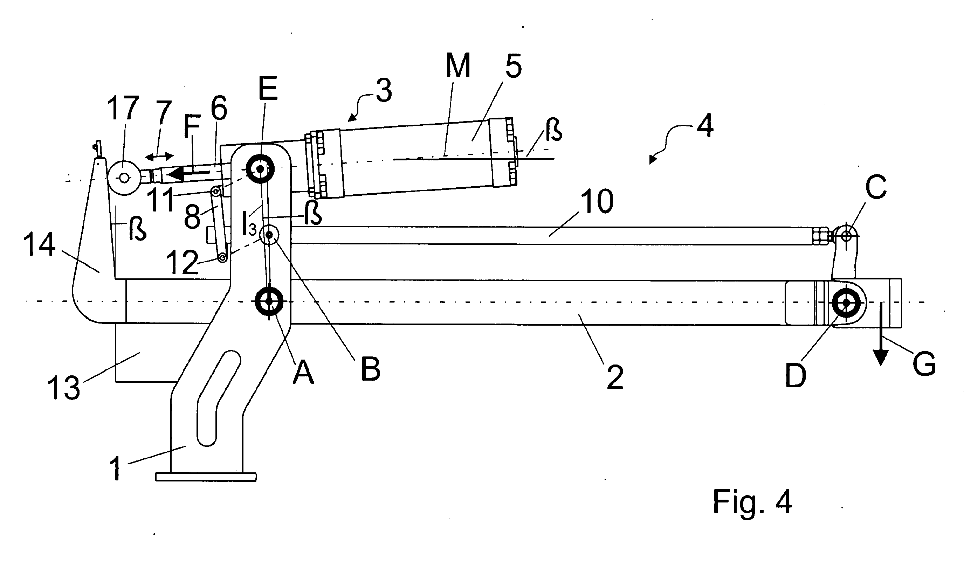

In der Figur 4 ist eine Ausgestaltung eines erfindungsgemäßen Handhabungsgerätes gemäß Anspruch 7 dargestellt, bei der die Kolben-/Zylindereinheit 3 unter einem Winkel β geneigt zu der Längserstreckung des Tragarms 2 angeordnet ist. Da wesentliche Gestaltungsdetails der Ausgestaltung nach Figur 4 mit derjenigen gemäß Figuren 1 bis 3 übereinstimmen, wird auf die diesbezügliche Beschreibung Bezug genommen und im wesentlich nur auf die Unterschiede eingegangen.

In der Figur 4 ist zu erkennen, dass die Kolben-/Zylindereinheit 3 unter dem Winkel β um wenige Winkelgrade, etwa im Bereich von bis zu 10° und vorzugsweise von etwa 5° geneigt zu der Längserstreckung des Tragarms 2 angeordnet ist, wobei zum einen die beiden Gelenke A und E, also das Gelenk A des Tragarms 2 sowie das Gelenk E der Kolben-/Zylindereinheit 3 ebenfalls um den Winkel β zueinander geneigt übereinander angeordnet sind. Der Abstand dieser beiden Gelenke A und E beträgt dabei konstant den Abstand l₃ und damit ist der Wirkabstand des Kraftangriff der Gegenkraft F festgelegt. Die Druckrolle 17 drückt in der in Figur 4 gezeigten Darstellung ebenfalls auf eine Fläche an dem Vorsprung 14, die ebenfalls um den Winkel β geneigt angeordnet ist.

Der Hebel 8 ist in dieser Ausgestaltung vorteilhaft auf der der Kolbenstange 6 zugeordneten Seite des Trägers 1 an dem Zylinder 5 der Kolben-/Zylindereinheit 3 angeordnet und damit platzsparend untergebracht. Der Hebel 8 wirkt wieder mit dem Parallelogrammgestänge aus Ausgleichsstange 10 und Tragarm 2 wie schon beschrieben zusammen und ist ebenso wie die beiden Gelenke A und E unter dem Winkel β geneigt angeordnet.

Durch die wie vorstehend beschrieben geneigte Anordnung der Kolben-/Zylindereinheit 3 kann eine weitere Verbesserung des Balanceverhaltens eines derart ausgebildeten Balancers 4 erreicht werden, die ebenfalls wieder durch ein Ausgleichsgewicht 13 noch einmal einjustiert werden kann. Von besonderem Vorteil sind die gleichbleibend über den gesamten Bewegungsbereich des Tragarms 2 vorhandenen Kraftwirkungen der Kolben-/Zylindereinheit 3 durch die Neigung zwischen Mittenachse M der Kolben-/Zylindereinheit 3 und dem Tragarm 2. Ansonsten gelten im wesentlichen die schon geschilderten Eigenschaften auch der Ausgestaltung der Erfindung gemäß Anspruch 1, auf die hier ausdrücklich Bezug genommen wird.

### Sachnummernliste

- 1: - Träger
- 2: - Tragarm
- 3: - Kolben-/Zylindereinheit
- 4: - Handhabungsgerät/Balancer
- 5: - Zylinder
- 6: - Kolbenstange
- 7: - Verstellbewegung Kolbenstange
- 8: - Hebel
- 9: - Kulisse
- 10: - Ausgleichsstange
- 11: - Drehgelenk Hebel
- 12: - Drehgelenk Hebel
- 13: - Ausgleichsgewicht
- 14: - Vorsprung Tragarm
- 15: - seitliche Verschiebung Kolbenstange
- 16: - Auflagerfläche
- 17: - Druckrolle
- F: - Gegenkraft
- G: - Last
- G1: - Gesamtgewichtskraft Kolben-/Zylindereinheit bei Stellung in Figur 1
- G2: - Gesamtgewichtskraft Kolben-/Zylindereinheit bei Stellung in Figur 2
- G3: - Gesamtgewichtskraft Kolben-/Zylindereinheit bei Stellung in Figur 3
- A: - Drehgelenk Tragarm
- B: - Drehgelenk Ausgleichsstange
- C: - Drehgelenk Ausgleichsstange
- D: - Drehgelenk Tragarm
- E: - Drehgelenk Kolben-/Zylindereinheit

## Patentansprüche

1. Handhabungsgerät (4) zum manuellen Bewegen von Lasten (G), insbesondere in Form eines Balancers (4), aufweisend einen um eine im wesentlichen vertikale Achse drehbar gelagerten Träger (1), an dem ein Tragarm (2) mit einem Ende um eine im wesentlichen horizontale Schwenkachse (A) wippbar gelagert ist und an dessen anderem Ende die Last (G) angreift, wobei das von der Last (G) um die Schwenkachse (A) des Tragarms (2) erzeugte Lastmoment durch ein Gegenmoment im wesentlichen ausgeglichen wird, das auch durch eine auf den Tragarm (2) wirkende Gegenkraft (F) einer Kolben-/Zylindereinheit (3) aufgebracht wird, deren Zylinderachse (M) in jeder Schwenklage des Tragarms (2) im wesentlichen parallel zu der Längsachse des Tragarms (2) ausgerichtet ist,
**dadurch gekennzeichnet, dass**
die Lage der Zylinderachse (M) der Kolben-/Zylindereinheit (3) und damit der Wirkabstand (I₁) der Gegenkraft (F) auf den Tragarm (2) senkrecht zur Längsachse des Tragarms (2) in jeder Schwenkstellung des Tragarms (2) durch einen an der Kolben-/Zylindereinheit (3) angeordneten Hebel (8) vorgegeben ist, der an einem Ende (11) drehbar und am anderen Ende (12) zur Längsachse des Tragarms (2) dreh- und/oder verschiebbar angeordnet ist.

2. Handhabungsgerät (4) gemäß Anspruch 1, **dadurch gekennzeichnet, dass** der Hebel (8) an seinem der Kolben-/Zylindereinheit (3) zugeordneten Ende (11) drehbar an der Kolben-/Zylindereinheit (3) angeordnet ist.

3. Handhabungsgerät (4) gemäß Anspruch 2, **dadurch gekennzeichnet, dass** der Hebel (8) am der Kolbenstange (6) gegenüberliegenden Ende des Zylinders (5) der Kolben-/Zylindereinheit (3) angeordnet ist.

4. Handhabungsgerät (4) gemäß einem der vorstehenden Ansprüche, **dadurch gekennzeichnet, dass** der Hebel (8) an seinem dem Tragarm (2) zugeordneten Ende (12) dreh- und verschiebbar relativ zu dem Tragarm (2) ausgebildet ist, vorzugsweise an einer Ausgleichsstange (10) festgelegt ist, die mit dem Tragarm (2) Teil eines Parallelogrammgestänges bildet.

5. Handhabungsgerät (4) gemäß Anspruch 4, **dadurch gekennzeichnet, dass** der Hebel (8) mittels einer Kulisse (9) an der Ausgleichsstange (10) verschiebbar festgelegt ist, wobei der Hebel (8) mit einem Ende (12) verdrehbar gegenüber der Kulisse (9) gelagert ist.

6. Handhabungsgerät (4) zum manuellen Bewegen von Lasten (G), insbesondere in Form eines Balancers (4), aufweisend einen um eine im wesentlichen vertikale Achse drehbar gelagerten Träger (1), an dem ein Tragarm (2) mit einem Ende um eine im wesentlichen horizontale Schwenkachse (A) wippbar gelagert ist und an dessen anderem Ende die Last (G) angreift, wobei das von der Last (G) um die Schwenkachse (A) des Tragarms (2) erzeugte Lastmoment durch ein Gegenmoment im wesentlichen ausgeglichen wird, das auch durch eine auf den Tragarm (2) wirkende Gegenkraft (F) einer Kolben-/Zylindereinheit (3) aufgebracht wird,
**dadurch gekennzeichnet, dass**
die Zylinderachse (M) in jeder Schwenklage des Tragarms (2) unter einem Neigungswinkel β zu der Längsachse des Tragarms (2) ausgerichtet ist, wobei der Wirkabstand (I₃) der Gegenkraft (F) auf den Tragarm (2) in jeder Schwenkstellung des Tragarms (2) durch den Abstand zwischen dem Drehpunkt (A) des Tragarms (2) und dem Drehpunkt (E) der Kolben-/Zylindereinheit (3) am Träger (1) vorgegeben ist sowie Drehpunkt (A) des Tragarms (2) und Drehpunkt (E) der Kolben-/Zylindereinheit (3) um den gleichen Neigungswinkel β zueinander geneigt übereinander angeordnet sind.

7. Handhabungsgerät (4) gemäß Anspruch 6, **dadurch gekennzeichnet, dass** der Neigungswinkel β der Zylinderachse (M) durch einen an der Kolben-/Zylindereinheit (3) angeordneten Hebel (8) vorgegeben ist.

8. Handhabungsgerät (4) gemäß Anspruch 7, **dadurch gekennzeichnet, dass** der Hebel (8) am der Kolbenstange (6) zugeordneten Ende des Zylinders (5) der Kolben-/Zylindereinheit (3) angeordnet ist.

9. Handhabungsgerät (4) gemäß einem der Ansprüche 7 oder 8, **dadurch gekennzeichnet, dass** der Hebel (8) seinem dem Tragarm (2) zugeordneten Ende (12) dreh- und/oder verschiebbar an einer Ausgleichsstange (10) festgelegt ist, die mit dem Tragarm (2) Teil eines Parallelogrammgestänges bildet.

10. Handhabungsgerät (4) gemäß einem der Ansprüche 6 bis 9, **dadurch gekennzeichnet, dass** die Kolbenstange (6) der Kolben-/Zylindereinheit (3) mit einem Bereich des Tragarms (2) wechselwirkt, der unter dem Neigungswinkel β + 90° geneigt von dem Tragarm (2) abgewinkelt angeordnet ist.

11. Handhabungsgerät (4) gemäß einem der vorstehenden Ansprüche, **dadurch gekennzeichnet, dass** die Kolben-/Zylindereinheit (3) derart schwenkbar an dem Träger (1) angeordnet ist, dass der Gesamtschwerpunkt (G1, G2, G3) der entsprechend der Schwenkstellung des Tragarms (2) unterschiedlich ausgefahrenen Kolben- /Zylindereinheit (3) sich beim Schwenken des Tragarms (2) im wesentlichen auf einer gekrümmten Bahn um den Drehpunkt (A) des Tragarms (2) bewegt.

12. Handhabungsgerät (4) gemäß einem der vorstehenden Ansprüche, **dadurch gekennzeichnet, dass** der Drehpunkt (E) der Kolben-/Zylindereinheit (3) vertikal versetzt, vorzugsweise oberhalb und beabstandet zu dem Drehpunkt (A) des Tragarms (2) an dem Träger (1) angeordnet ist.

13. Handhabungsgerät (4) gemäß einem der vorstehenden Ansprüche, **dadurch gekennzeichnet, dass** die Kolben-/Zylindereinheit (3) derart an dem Träger (1) angeordnet ist, dass der Zylinder (5) mit seinem der Kolbenstange (6) zugeordneten Endbereich drehbar an dem Träger (1) festgelegt ist.

14. Handhabungsgerät (4) gemäß einem der vorstehenden Ansprüche, **dadurch gekennzeichnet, dass** die Kolben-/Zylindereinheit (3) derart an dem Träger (1) angeordnet ist, dass der Zylinder (5) bezogen auf die vertikale Erstreckung des Trägers (2) sich im wesentlichen auf einer Seite und die Kolbenstange (6) sich im wesentlichen auf der gegenüberliegenden Seite des Trägers (1) befindet.

15. Handhabungsgerät (4) gemäß einem der vorstehenden Ansprüche, **dadurch gekennzeichnet, dass** die Kolbenstange (6) die das Gegenmoment erzeugende Gegenkraft (F) in Richtung der Zylinderachse (M) seitlich frei verschiebbar auf eine Auflagefläche (16) eines Vorsprungs (14) des Tragarms (2) überträgt.

16. Handhabungsgerät (4) gemäß Anspruch 15, **dadurch gekennzeichnet, dass** der Angriffspunkt der Gegenkraft (F) der Kolben-/Zylindereinheit (3) an der Auflagefläche (16) des Vorsprungs (14) sich in Abhängigkeit von der Veränderung des Angriffspunktes der Last (G) bezogen auf den Drehpunkt (A) des Tragarms (2) verändert.

17. Handhabungsgerät (4) gemäß einem der vorstehenden Ansprüche, **dadurch gekennzeichnet, dass** der Abstand (I₁) zwischen Zylinderachse (M) und Drehpunkt (A) des Tragarms (2) an dem Träger (1) sich gegengleich zu der Veränderung des Angriffspunktes (I₂) der Last (G) bezogen auf den Drehpunkt (A) des Tragarms (2) verändert.

18. Handhabungsgerät (4) gemäß einem der vorstehenden Ansprüche, **dadurch gekennzeichnet, dass** an dem Tragarm (2) ein Ausgleichsgewicht (13), vorzugsweise in und/oder quer zur Längsrichtung des Tragarms (2) verschiebbar, gehaltert ist, mit dem die Wirkung der Gegenkraft (F) der Kolben-/Zylindereinheit (3) justierbar ist.

19. Handhabungsgerät (4) gemäß einem der vorstehenden Ansprüche, **dadurch gekennzeichnet, dass** die Lagezuordnung der Mittelachse (M) der Kolben-/Zylindereinheit (3) relativ zur Längsachse des Tragarms (2) durch die Länge zwischen den Drehpunkten (11, 12) des Hebels (8) beeinflussbar ist.

20. Handhabungsgerät (4) gemäß einem der vorstehenden Ansprüche, **dadurch gekennzeichnet, dass** die von der Kolben-/Zylindereinheit (3) erzeugte Gegenkraft (F) im wesentlichen konstant gehalten ist.
